# EUROPEAN PATENT APPLICATION

(11) **EP 4 841 528 A1**
(43) Date of publication of application: **18.11.2026**
(21) Application number: 25305694.9
(22) Date of filing: 15.05.2025
(51) Int. Cl.: G06N 20/00, F24T 50/00, F24T 10/13

(54) **SYSTEM AND METHOD FOR POWER CONSUMPTION FORECASTING**

(71) Applicant: Services Pétroliers Schlumberger, 75007 Paris (FR); Schlumberger Technology B.V., 2514 JG The Hague (NL)
(72) Inventor: AMUR VARADARAJAN, Prasanna, 92142 Clamart cedex (FR); CHAMBON, Sylvain, 92142 Clamart cedex (FR); JAN, Aymeric Lilian, 92142 Clamart cedex (FR); DARURE, Tejaswinee, 34000 Montpellier (FR); MALIGE, Paul, 92142 Clamart cedex (FR)
(74) Representative: Schlumberger Intellectual Property Department

(57) **Abstract**

A system may obtain a thermal sample of a parameter relative to a thermal demand of the facility over a short period, wherein the thermal sample has a sample duration and sample resolution exhibiting periodicity. A system may train a thermal model for predicting the thermal demand of the facility based on the thermal sample, wherein the thermal model is based at least on one external factor, wherein the external factor includes a predicted external temperature and wherein training the thermal model includes determining one or more variables of the thermal model using the thermal sample. A system may predict a thermal demand of the facility based on the trained thermal model and the external factor. A system may design a component of the geothermal heating and/or cooling system based at least partially on the predicted thermal demand.

## Description

### PRIORITY

N/A.

### BACKGROUND

Estimated building thermal needs represent a critical factor when dimensioning a heating and/or cooling production system based on geothermal wells, such as closed loop geothermal wells. Knowing the thermal demand needs over a long horizon helps selecting the heat pump and the total number of wells to be drilled during the design phase. Once the system is in operation, knowing the thermal needs of the building in the shorter time horizon helps to control the production system in an optimal way to have an efficient system and ensure that the geothermal wells are operated within safe limits.

### SUMMARY

In some aspects, the techniques described herein relate to a method of designing a geothermal heating and/or cooling system in thermal communication with a facility, the method including: obtaining a thermal sample of a parameter relative to a thermal demand of the facility over a short period, wherein the thermal sample has a sample duration and sample resolution exhibiting periodicity; training a thermal model for predicting the thermal demand of the facility based on the thermal sample, wherein the thermal model is based at least on one external factor, wherein the external factor includes a predicted external temperature and wherein training the thermal model includes determining one or more variables of the thermal model using the thermal sample; predicting a thermal demand of the facility based on the trained thermal model and the external factor; and designing a component of the geothermal heating system based at least partially on the predicted thermal demand.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, non-schematic drawings should be considered as being to scale for some embodiments of the present disclosure, but not to scale for other embodiments contemplated herein. Understanding that the drawings depict some example embodiments, the embodiments will be described and explained with additional specificity and detail through the use of the accompanying drawings in which:
FIG. 1 is a schematic representation of a system including a building configured to receive thermal power (i.e., heat or coolth) from a geothermal well, according to at least some embodiments of the present disclosure.
FIG. 2 is a flowchart illustrating a method of designing a component of a system, such as the system described in relation to FIG. 1, according to at least some embodiments of the present disclosure.
FIG. 3 illustrates an example prediction using a thermal model compared to the measured thermal demand.
FIG. 4 is a graph illustrating the seasonality extracted from the prediction curve of FIG. 3 independently of the external temperature maximum.
FIG. 5 is a graph illustrating the upper prediction bound and the lower prediction bound according to the method described in relation to FIG. 2.
FIG. 6 is a graph illustrating an embodiment of a prediction output by a thermal model trained and tested on experimentally collected thermal heating data.
FIG. 7 is a flowchart illustrating the creation of a building audit, according to at least some embodiments of the present disclosure.
FIG. 8 is a flowchart illustrating a method of real-time predictive controls, according to at least some embodiments of the present disclosure.

### DETAILED DESCRIPTION

In the following, reference is made to embodiments of the disclosure. It should be understood; however, that the disclosure is not limited to specific described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the claims except where explicitly recited in a claim. Likewise, reference to "the disclosure" shall not be construed as a generalization of inventive subject matter disclosed herein and should not be considered to be an element or limitation of the claims except where explicitly recited in a claim.

Although the terms first, second, third, etc., may be used herein to describe various elements, components, regions, layers and/or sections, these elements, components, regions, layers and/or sections should not be limited by these terms. These terms may be only used to distinguish one element, components, region, layer or section from another region, layer or section. Terms such as "first", "second" and other numerical terms, when used herein, do not imply a sequence or order unless clearly indicated by the context. Thus, a first element, component, region, layer or section discussed herein could be termed a second element, component, region, layer or section without departing from the teachings of the example embodiments.

The present disclosure relates generally to an interpretable and tunable model for designing and/or controlling operations of a building, a geothermal well (comprising one or more wellbores), or a combination of building and geothermal well. The heating, ventilation, and air conditioning (HVAC) demand of a building or other structure is conventionally calculated in a design phase by from detailed 3D building models done with existing software applications, which require all geometrical profile of the building along with the physical parameters of components and/or materials used. A challenge with the conventional calculations lies in knowing all the details of the building. Additionally, other conventional demand calculation models based on data-driven approaches are black box models, which rely heavily on large historical data sets.

As noted above, the present disclosure relates to an interpretable and tunable model that includes a grey-box approach to estimating an HVAC demand based on measurements from an existing structure. In some embodiments, the method described herein includes a physics-based forecasting model to calculate the demand for the entire year. Also, this can be automatically extended to predict the short horizon demand from the near past measurements. In at least some embodiments, a benefit of the systems and methods described herein includes a reliance on only sparse data measured over a relatively short sampling period, and the systems and methods described herein include a modulating parameter to extend the model to unseen data during the training phase of the model. In particular, some embodiments according to the present disclosure provide demand forecasting for a structure and/or supply forecasting for a geothermal well (such as a closed loop shallow geothermal well) that allows more accurate and/or efficient building design, well design, system controls, and combinations thereof.

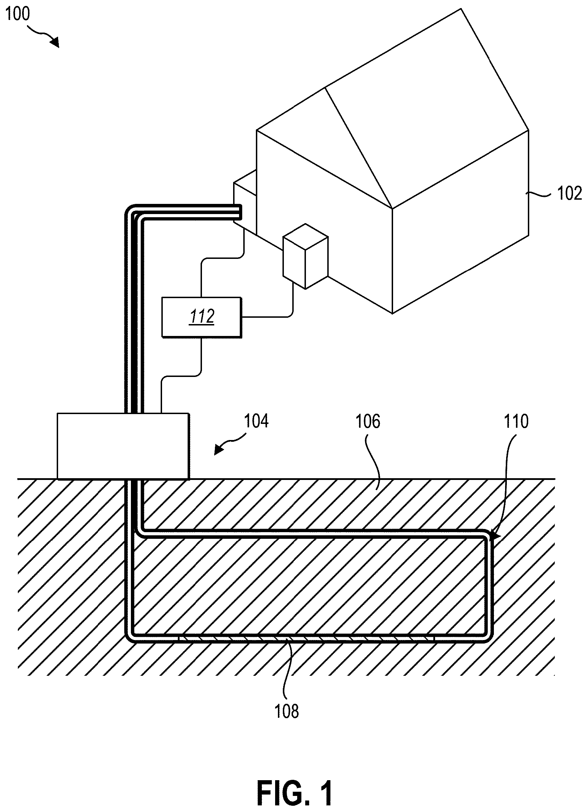

FIG. 1 is a schematic representation of a system 100 including a building 102 configured to receive thermal power from a geothermal well 104. In some embodiments, the system 100 begins with a building 102 or other structure, and the geothermal well 104 is designed to have a thermal power capacity to meet the demands of the building 102 and/or combined demands of a plurality of buildings.

In some examples, the geothermal well 104 is a closed loop geothermal well. In some embodiments, the geothermal well 104 is an open loop geothermal well. In some embodiments, the geothermal well includes a plurality of wellbores, optionally slanted wellbores in a star-shaped configuration, i.e. diverging from each other with depth. In some embodiments, the geothermal well 104 receives heat from the surrounding earthen formation 106 through a borehole heat exchanger 108, and a working fluid 110 in the geothermal well 104 transfers the heat to the building 102 to heat the building. In some embodiments, the working fluid 110 receives heat from the building 102, and the working fluid 110 transfers the heat to the earthen formation 106 through borehole heat exchanger 108 of the geothermal well 104 in order to cool the building. In some embodiments, the geothermal well 104 has a limit on how much heat can be provided to the working fluid 110 to heat the building 102 for a given size and/or efficiency of the geothermal well 104. In some embodiments, the geothermal well 104 has a limit on how much heat can be received from the building 102 and transferred to the formation 106. In some embodiments, local regulations place limits on a ground thermal load to and/or from the formation 106 by a geothermal well so that the earthen formation temperature does not migrate outside a predetermined range. In at least some embodiments, therefore, it is beneficial to model the thermal demand and/or thermal supply of the building 102, the geothermal well 104, or the system 100 as a whole.

The system 100 may include one or more controllers 112 in data communication with pumps, valves, fans, or other components of the building 102 and/or geothermal well 104 to control and/or direct heat flow through the system 100. In some embodiments, a controller 112 is in data communication with an external network to communicate with one or more remote computing devices or to access additional information, such as weather forecasts. In some examples, the controller 112 performs at least part of any method described herein to control and/or direct heat flow through the system 100 based on a thermal model of the system 100.

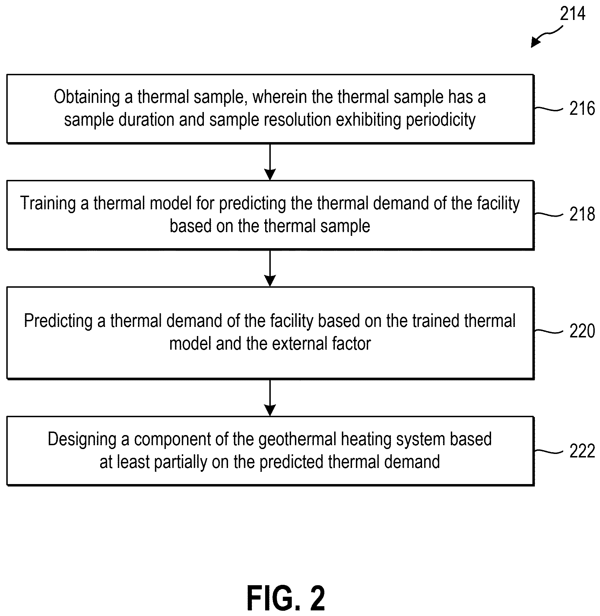

FIG. 2 is a flowchart illustrating a method 214 of designing a component of a system, such as the system 100 described in relation to FIG. 1. In some embodiments, designing a component includes designing or determining at least a parameter of a geothermal well. For example, designing a component of the system may include determining a target depth and/or length of a closed loop geothermal well. In some examples, designing a component of the system may include determining a thermal transfer capacity of a borehole heat exchanger of a geothermal well.

In some embodiments, designing a component of the system may include changing at least one setpoint or schedule of setpoints for a controller of the system. In some embodiments, the controller changes a flowrate of a working fluid through the system between the building and the geothermal well. In some embodiments, the controller changes a fan rate of air circulated through an interior volume of the building to a heat pump or heat exchanger in the building. In some embodiments, the controller changes a temperature set point of the HVAC system in the building. In some embodiments, the controller changes a flowrate of working fluid through the geothermal well. In some embodiments, the geothermal well includes a plurality of boreholes or fluid loops in the formation where different boreholes or fluid loops transfer different quantities of heat between the working fluid and the formation. In such examples, the controller may change or select one or more boreholes or fluid loops of the geothermal well through which a working fluid flows. In some embodiments, in case the system includes additional heating and/or cooling components, the controller implements the on/off schedule of each of the components.

In some embodiments, the method 214 includes obtaining a thermal sample at 216. In some embodiments, the thermal sample is a thermal demand sample of a thermal power required by a building for heating and/or cooling, such as the building 102 described in relation to FIG. 1. In some examples, the thermal demand is a heating demand sample of the building to extract heat from a geothermal well and transfer the heat to the building. In some examples, the thermal demand is a cooling demand sample of the building to extract heat from the building and transfer the heat to a geothermal well. In some embodiments, the thermal sample is a thermal supply sample of a geothermal well, such as the geothermal well 104 described in relation to FIG. 1. In some embodiments, the thermal sample is a thermal sink sample of a geothermal well. For example, the thermal sample may be a ground thermal load of the geothermal well.

In some embodiments, the thermal sample has a sample duration and sample resolution exhibiting periodicity. For example, the sample duration and/or sample resolution may be selected based on a desired periodicity. In some examples, the sample duration is no less than one day, wherein the 24-hour sample duration exhibits the periodicity of the day and night cycle and associated external temperature changes. In some examples, a 24-hour sample duration further exhibits the periodicity of the waking- and sleeping-hours cycle of a resident of the building. In some examples, the 24-hour sample duration exhibits the periodicity of the working hours of an office building, depending on the nature of the building.

In some embodiments, the sample duration is no less than one week. In such examples, the one-week sample duration exhibits all described periodicities of a 24-hour cycle with the additional periodicity of a work week and weekend cycle. For example, an office building may exhibit lesser thermal demand on the weekends while the office building is unoccupied, and a residential building may exhibit greater thermal demand on the weekend while the residents are home. In some examples, individual days may exhibit different thermal demands, such as the office building reducing thermal demand in the afternoon on Friday of the work week, as the end of the work week approaches. In some examples, a residential building may exhibit different daily thermal demands based on a resident's personal schedule. In some embodiments, the sample duration is no less than two weeks. A two-week sample duration may, for example, allow confirmation and/or refinement of the periodicity exhibited over the course a single week, allowing greater confidence and lower error in fitting the thermal model, as will be described in more detail herein.

In some embodiments, the thermal sample has a sample resolution (e.g., sampling frequency) that is no more than 10% of the sample duration. In such an example, a 24-hour sample duration has a sampling resolution no more than 144 minutes. In some embodiments, the thermal sample has a sample resolution that is no more than 5% of the sample duration. In such an example, a 24-hour sample duration has a sample resolution that is no more than 72 minutes. In at least one example, a thermal sample has a one-hour sample resolution. In other embodiments, the sample resolution is more than one hour, such as two hours, three hours, six hours, twelve hours, etc. In yet other embodiments, the sample resolution is less than one hour, such as 30 minutes, 20 minutes, 15 minutes, 10 minutes, 6 minutes, 3 minutes, etc.

The thermal samples may be obtained by measuring parameters of the building and/or the geothermal well using one or more sensors, such as temperature sensors and/or thermal flux sensors, flow sensors, electric current and/or voltage sensors, etc., and/or via obtaining such data from an external source.

The method 214 further includes training a thermal model for predicting the thermal demand of the facility based on the thermal sample at 218. In some embodiments, the thermal model is based at least on one external factor. For examples, the external factor may include a predicted external temperature. In some embodiments, the thermal model is trained on the thermal sample to approximate the periodicity of the thermal sample relative to an external temperature. For example, the periodicity of a thermal demand of a building may be related to a usage of the building, while an amplitude of the demand is further correlated to the external temperature. In some embodiments, training the thermal model includes determining one or more variables of the thermal model using the thermal sample.

In some embodiments, the thermal model used for the forecasting is based on or includes decomposition of time-series data in a trend and a seasonality. The trend corresponds to the general tendency of the time series (linear increase, exponential decrease, etc.), while the seasonality describes periodic events related to the time of the day, the day of the week, of the month, of the year. For example, a model according to the present disclosure approximates HVAC demand as a function of time and external temperature. In such an example, the seasonality of the model depends only on time, whereas the demand is modulated by the external temperature, correlated to the power consumption: $\hat{P} \left(t, {T}_{ext}\right) = f \left({T}_{ext}\left(t\right)\right) \times S \left(t\right) + ϵ \left(t\right)$ With *ε*(*t*) the error of the model, *f*(*Tₑₓₜ*(*t*)) a general trend depending on the external temperature (also can be extended to a function with *Tₑₓₜ-T_{SP}*, where *T_{SP}* stands for setpoint Temperature in the building, can be extended for other modulating parameters), and *S*(*t*) the seasonality. The seasonality, as it is a periodic function, can be approximated using a Fourier series, therefore, given *n* the number of harmonics, corresponding to the complexity of the model, the seasonality *S*(*t*) is defined as: $S \left(t\right) = {\sum }_{k = 1}^{n} {a}_{k} cos \left(kωt\right) + {b}_{k} sin \left(kωt\right)$ With $ω = \frac{2 π}{p}$, where *p* corresponds to the largest period in the signal. In some embodiments, *p* is equal to one week when the model is calculating a weekly seasonality.

In some embodiments, to fit this model to the obtained thermal sample, training the model includes iterating on the different coefficients *aₖ, bₖ,* and the parameters corresponding to the trend. In some embodiments, *aₖ* and *bₖ* allow periodicity fitting of the model to the obtained sample.

In some embodiments, the training changes at least one model parameter based on the available data in the thermal sample. These parameters can be summarized as a vector h, therefore, which allows the formulation of the optimization problem as follows: ${min}_{h} {\left|\left|P\left(t\right)-\hat{P}\left(t, {T}_{ext}\right)\right|\right|}_{2}^{2}$ where ∥x∥₂ corresponds to the Euclidean norm of *x*. In other words, the parameters of the model, such as *aₖ*, *bₖ*, are selected so that the thermal model matches the thermal sample (represented by P(t)) as much as possible.

In some embodiments, training the thermal model includes estimating prediction errors. For example, the thermal model may provide lower and upper confidence bounds with a degree of confidence *α*. In some embodiments, validating the thermal model to estimate errors includes bootstrapping, wherein a single dataset is resampled to create many simulated thermal samples. In some embodiments, when fitting the model on the data, the method includes generating at least three subsets of the original dataset through resampling and/or simulation. In some embodiments, the thermal model is trained on the combination of the subsets of the original dataset. In some embodiments, different iterations of the thermal model are trained on different subsets, and predictions from each of the trained models are compared. In some embodiments, for each point in the prediction array, the method includes computing the quantiles *α* and 1 - *α* to obtain lower and upper bounds of the predictions.

In some embodiments, the method 214 further includes predicting a thermal demand of the facility based on the trained thermal model and the external factor at 220 wherein the model duration is greater than the sample duration. For example, a thermal sample having a two-week sample duration may be used to train a thermal model that is extended over 6 months. In such an example, the thermal model predicts the thermal demand of a building of the system based on the external factor for the model duration. In at least one example, the method includes obtaining and providing to the thermal model a weather forecast for the model duration, such as one month, six months, one year, or more. The periodicity fit to the thermal model may be correlated to the changes in external temperature, humidity, precipitation, or other values in the weather forecast to scale the amplitude of the thermal demand in the model over the course of the model duration.

The method can therefore model the thermal demand of a building over a certain period of time, whether in the past and/or the future based on the weather data and/or weather forecast, without providing permanent measurements that are not always available.

In some embodiments, the method 214 further includes designing a component of the geothermal heating system based at least partially on the predicted thermal demand at 222. As described herein, designing the component may include selecting at least one physical dimension of a geothermal well of the system. As will be described in more detail herein, designing the component may include auditing a building's thermal demand for a short period and inferring the design of the geothermal well. In some examples, designing the component may include selecting at least one hardware component of the system. In some examples, designing the component may include selecting a setting of a component of the system, such as a controller and/or a heat pump of the system.

In some embodiments, the method may include determining a health of the borehole of the geothermal well and determining a maintenance need or schedule of the borehole and/or geothermal well. As will be described in more detail herein, in some embodiments, the geothermal system is used in conjunction with a boiler, furnace, or other supplemental HVAC components, and designing the component may include designing a control schedule for control and/or activation of the supplemental HVAC component(s). As will be described in more detail herein, in some embodiments, designing the geothermal system may include changing one temperature setpoint of the building and/or facility.

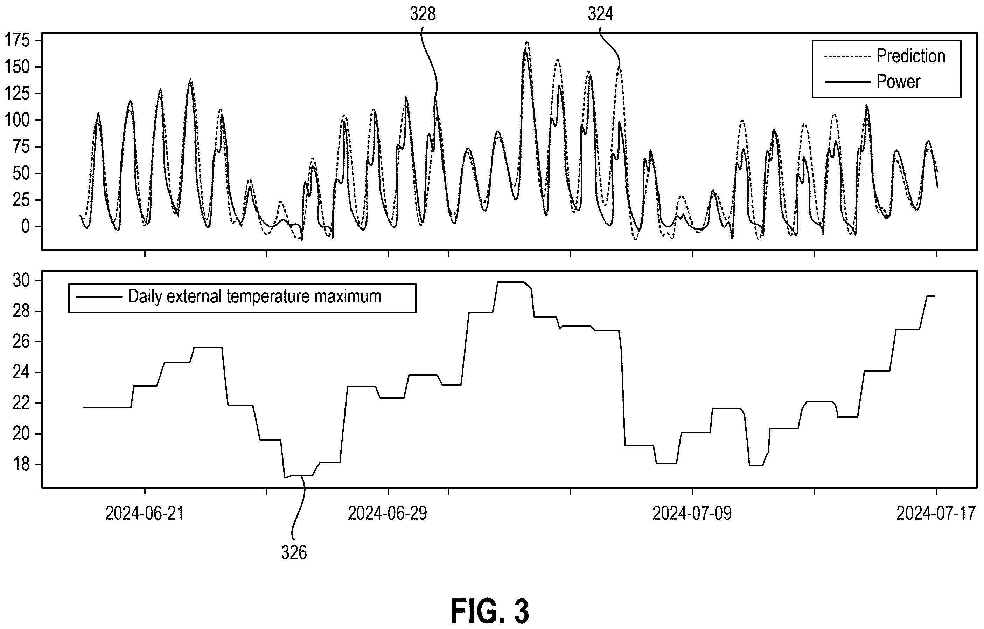

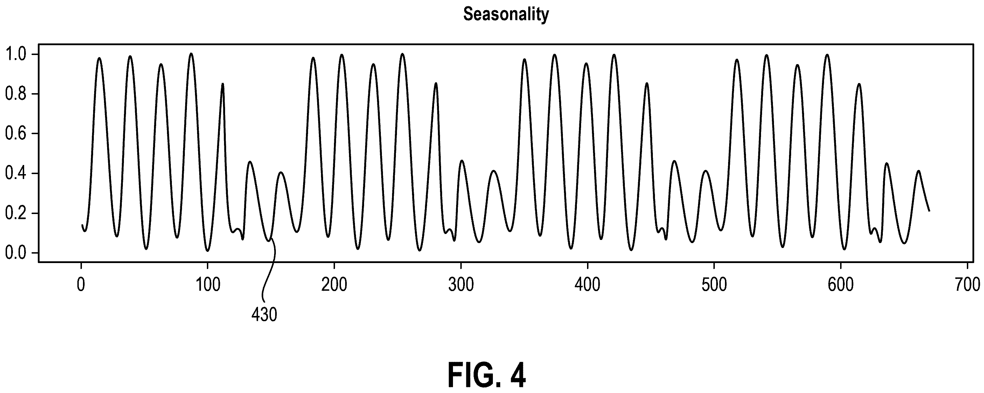

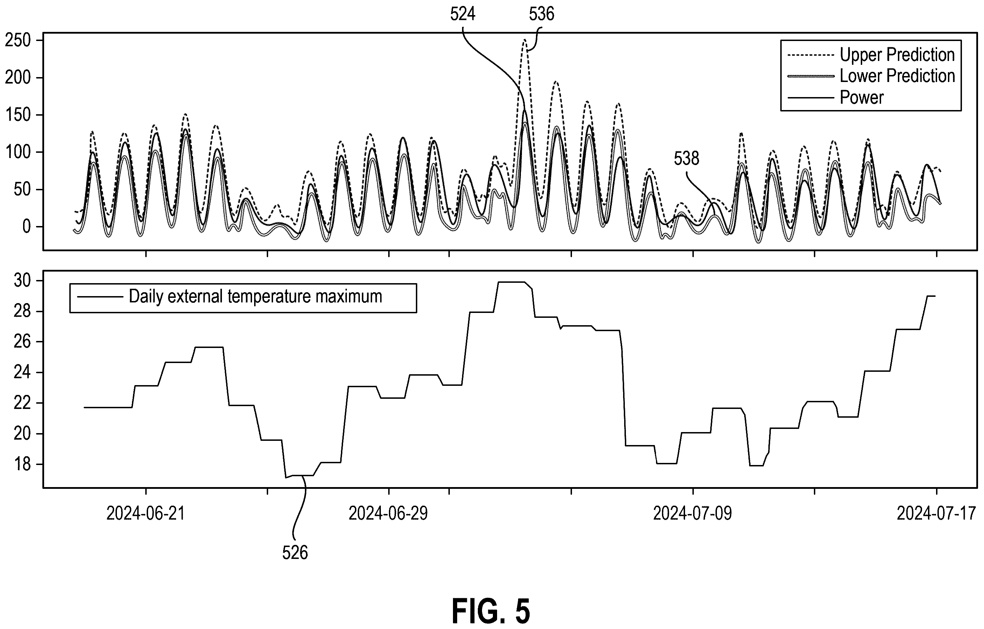

FIG. 3 illustrates an example prediction 324 using a thermal model compared to the measured thermal demand (in power consumption). For example, the predictions of the thermal model are scaled by the external temperature maximum 326 recorded for each day, and the predictions (obtained via the thermal model obtained as described above) exhibit matching to the measured consumption 328 (as measured). The data of FIG. 3 is based on a thermal model trained from June 19th, 2023, to July 2nd, 2023, and tested from July 3rd, 2023, until July 17th, 2023. FIG. 4 is a graph illustrating the seasonality 430 extracted from the prediction 324 curve of FIG. 3 independently of the external temperature maximum 328. The seasonality 430 exhibits both daily seasonality 432, as well as weekly seasonality 434, with clear differences in demand between day and night, as well as weekdays and weekends. FIG. 5 is a graph illustrating the upper prediction bound 536 and the lower prediction bound 538 according to the method described in relation to FIG. 2. The predicted power consumption 524 is the prediction 324 described in relation to FIG. 3.

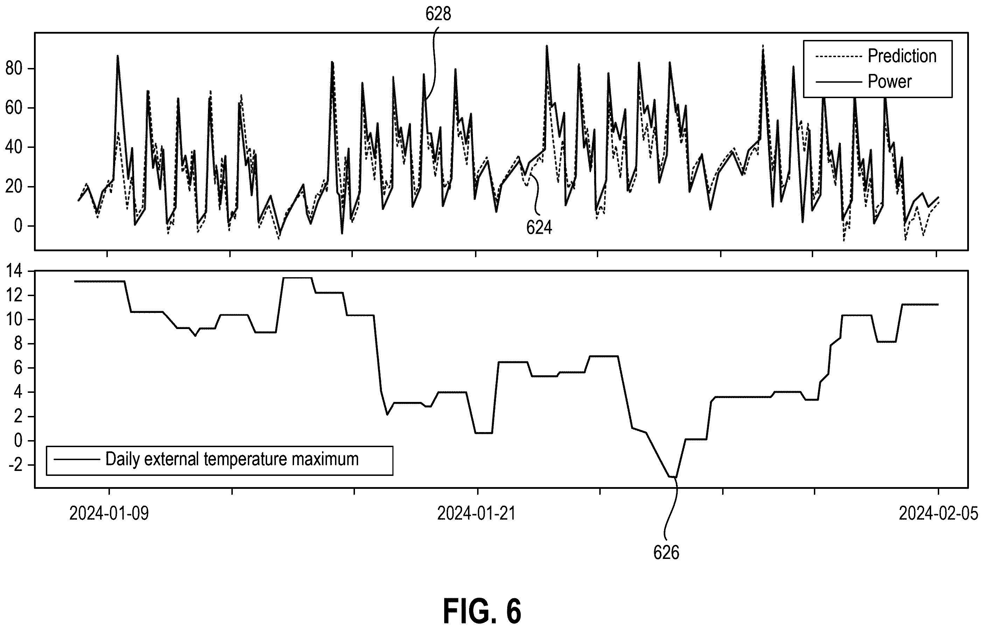

The thermal sample and associated trained thermal model of FIG. 3 through FIG. 5 capture an embodiment of a geothermal system operating to cool a building using a working fluid circulated through a geothermal well. In some embodiments, the thermal sample and associated trained thermal model are trained on and/or predict demand of the system operating to heat a building of the geothermal system. For example, FIG. 6 is a graph illustrating an embodiment of a prediction 624 output by a thermal model trained on thermal heating data from January 8^{th}, 2023, to January 22^{nd}, 2023, and compared to testing data 628 recorded from January 23^{rd}, 2023, until February 5^{th}, 2023. The external temperature maximum 626 is illustrated below. Further, a trained thermal model trained on heating data is applicable to cooling demand when the model duration is extended across seasons.

The method described herein, in some embodiments, has different embodiments of designing the geothermal well disclosed hereinafter. For example, the method and associated trained thermal model may be used to monitor (qualitatively or quantitatively) borehole health of the geothermal well. When operating closed loop shallow geothermal wells, it may be critical to monitor the inlet temperature of the fluid that enters the wells for various reasons. In some examples, local regulations may limit the borehole temperature within a prescribed range, so the borehole does not risk impacting the formation. The ability to predict that the temperatures may be outside of the prescribed range may help operators take preventive action. In some embodiments, predicting high cooling demand periods can allow a controller (such as the controller 112 described in relation to FIG. 1) to pre-emptively activate or enable supplemental HVAC components, such as activating a compressor cooling device or evaporative cooling device such that the inlet temperature of the working fluid entering the borehole remains within allowable values.

In some embodiments, a complete digital twin of the subsurface system, as described for instance in the application EP23307000.2, is used in combination with the prediction of the thermal demand for the building as described in relationship with FIG. 2.

For example, the digital twin can be based on any kind of data-driven or physics-based model that can approximate the behavior of the subsurface temperatures. In such embodiments, designing the geothermal well system includes, from the power consumption forecast, using a digital twin to estimate the predicted values of one or more target subsurface temperatures, such as the inlet and outlet temperature of the working fluid in the geothermal well and/or the temperature of the subsurface formation in one or more locations. In at least one embodiment, the predicted values of the inlet and outlet temperature prevent exceeding the regulatory limits of the inlet fluid temperature, the outlet fluid temperature, the subsurface temperature, or other predetermined temperature limits. In at least one embodiment, when at least one of the target temperatures is outside of the prescribed range and/or within boundaries of the prescribed range, the controller may turn on additional HVAC components as described above.

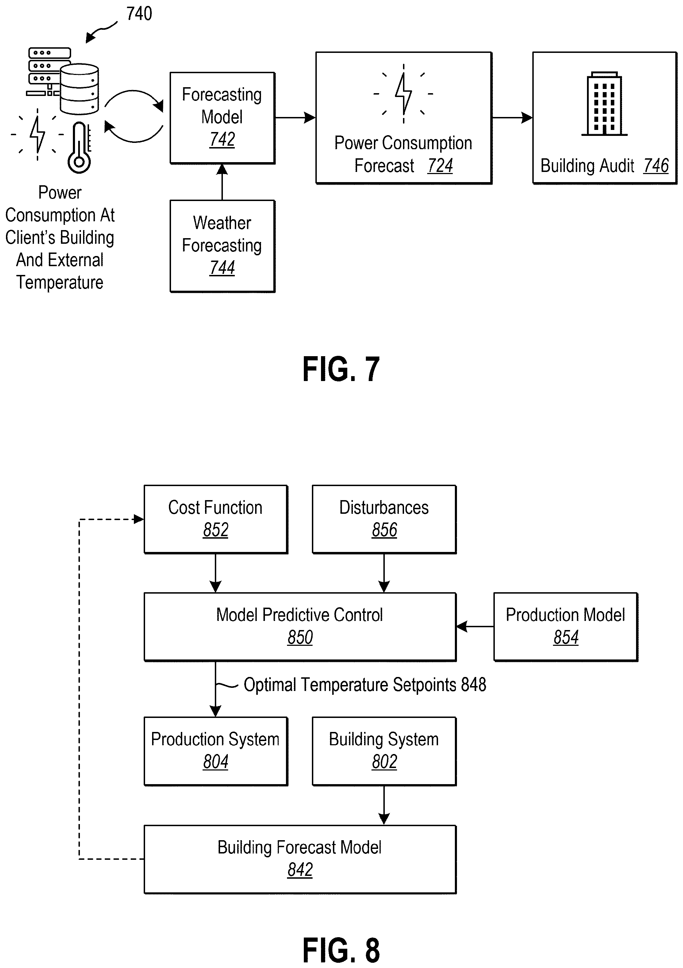

FIG. 7 is a flowchart illustrating the creation of a building audit using the method(s) described herein. In some examples, the yearly building heating and cooling demand (building audit 746) is a critical parameter that helps in determining the size of a geothermal well production system. As described herein, the conventional modeling of building to calculate the thermal needs is a complex task and needs interdisciplinary expertise. For example, the conventional demand estimation is either made with software simulations or from an estimate with electricity bills over a year.

In some embodiments, a method of creating a building audit includes obtaining a thermal sample 740 over a sample duration, as described herein, that is subsequently used to train the thermal model 742. A weather forecast 744 including at least a forecasted external temperature maximum is provided to the thermal model 742 to extend the thermal model 742 for a model duration, such as 6 months or one year, to calculated predicted thermal demand. In some embodiments, the weather forecast 744 is based on historical weather information, such as average external temperature maximums, average temperature variation in a day, average precipitation, or average humidity. The resulting prediction 724 of the power consumption for both heating and cooling can then be used to calculate the costs of heating for the coming year for the building and dimension and/or design at least a portion of a geothermal production system.

In at least some embodiments, the predictive model can allow for more precise system controls for a hybrid HVAC system in a building. In yet other examples, the predictive model can allow for alerts due to a detected fault or degradation in the system. In some embodiments, the predictive model may be used to assess a cost difference between the predicted costs of heating (which may be corrected for the building based on the measured consumption) and an actual cost. In some embodiments, the cost difference may be used to adjust a predicted thermal demand cost and provide an estimate of future energy cost for a future time period. Commercial performance contracts can be based on various metrics, such as a total amount of geothermal energy over a period, or an average coefficient of performance over that period. Commercial performance contracts need a reliable baseline to compare the performance of the system with a theoretical or predicted performance of the system. In some embodiments, the prediction of the power consumption for both heating and cooling is more accurate to be used as a baseline for thermal demand (as computed based on the real weather conditions) than standard dynamic thermal simulations. Therefore, the use of the thermal model(s) described herein can allow more accurate understandings of the performance or changes in performance of the heating and/or cooling system.

In some embodiments, the predictions and/or predictive capabilities of the thermal model with weather forecasts allow real-time system controls (such as by a controller 112 described in relation to FIG. 1). In some embodiments, the prediction(s) of the thermal model can also provide fault diagnosis and/or recovery in the event of a system fault. Designing a component of the geothermal well system may therefore include controlling such component. FIG. 8 is a flowchart illustrating a method of real-time predictive controls. Predictive control and fault diagnosis both rely on the principle that the user and/or controller have appropriate prediction of the building system and take preventive actions accordingly. In some embodiments, the model predictive control strategies for the buildings that are coupled with geothermal hybrid systems may provide up 30% energy savings.

In some embodiments, a building HVAC system includes one or more supplemental components in addition to the geothermal well connection. For example, the geothermal well system may be supplemented by auxiliaries like a boiler, a furnace, a heat pump, a compression chiller, an evaporative cooler, etc. that provide heating or cooling to the given building. For an optimal operation of the production system, a controller or use manages scheduling of the system as whole including the supplemental components. For example, the controller may be configured to schedule switchover between geothermal heating and/or cooling and supplemental heating and/or cooling. In some embodiments, the controller may be configured to choose a setpoint temperature of the production to save energy and cost.

To approach this objective, the proposed building demand thermal model 842 (obtained using the method of FIG. 2 and similar as the thermal model 342 of FIG. 3) can be powerful tool to predict the future demand or temperature evolution and generate strategies for production setpoint temperatures 848 or optimal scheduling plan. Moreover, building thermal model 842 can serve as the fault detector notifying the user about the abnormal usage of the building 802.

The presented approach of the building demand thermal model 842 is provided as an input to a model predictive control 850, which can be used to determine one or more parameters of the system.

In one embodiment, the model predictive control is used to determine the optimum schedule of each of the heating and/or cooling components (i.e., geothermal system and other supplemental components) for the building and/or facility based on the cost of heating and/or cooling of each component. For example, for a given hybrid geothermal system (i.e., a geothermal well 804 in addition to other supplemental components), a cost function 852 of the model predictive control 850 can be written as: $J = {min}_{a , b , c} α {\sum }_{i = 0}^{np} \left({aW}_{cooling _ aux}+{bW}_{heating _ aux}+{cW}_{geothermal}\right)$ where, J is the cost to be minimized over the prediction horizon *np.* α is electricity rate per watt. W represent the electric work done while a, b, and c are the array binary variables (0 and 1) that depicts the on-off scheduling of the sources. The predicted demand obtained with some embodiments of the present disclosure serves as the constraints that the predictive controller is bound to produce (for instance, the electric work of each heating and/or cooling device shall be tuned so that the sum of the thermal power provided by each of the component over the period is equal to the building thermal demand as predicted by the thermal model. Any additional system constraints, such as the regulatory constraints described herein can be further included in the example above. The model predictive control may have a mixed integer optimization problem at its core.

Furthermore, if a fault event or other disturbances 856 occur due to a system or equipment malfunction or changes to the production model 854, the event can be diagnosed successfully using the described method. In some embodiments, the predictive controller accounts for the faulty event to generate a new plan. For example, if the auxiliary heating sources are under maintenance, the model predictive control 850 sets (b=0) in above equation and delivers the optimal sequence to satisfy the predicted demand.

In some embodiments, the flowchart in FIG. 8 shows the process flow of the production temperature control in order to optimize the economic cost of the heating and/or cooling of the facility. While this example may encompass a continuous optimization problem of which an example of the cost function is denoted below, as described herein, a heating season with geothermal system and boiler is considered: $\begin{matrix}J = {min}_{{T}_{setpoint}} {\sum }_{i = 0}^{np} {αQ}_{1} W _ geothermal ∗ COP \left({T}_{setpoint}, {T}_{borehole}\right) = {Q}_{2} {\left‖T_setpoint\right‖}^{2} + {\left‖Δ{T}_{setpoint}\right‖}^{2} \\ + {Q}_{4} \frac{{Q}_{boiler} \left({T}_{setpoint}, {T}_{return}\right)}{{η}_{boiler}} ∗ {c}_{gas}\end{matrix}$ where, J is the cost of optimization, minimized to find optimal *Tₛₑₜₚₒᵢₙₜ*, *Q*₁, *Q*₂ and *Q*₃ are the weights that penalizes the terms according to the priority. *COP* denotes the coefficient performance that is function of heat pump setpoint temperature, which in turn affects the electrical consumption. *Q_{boiler}* is the heat flux provided by the boiler, where its function of setpoint temperature. *Tᵣₑₜᵤᵣₙ* is the temperature of boiler inlet, that can be considered constant. In some examples, the Δ denotes the change in temperature from previous and current to reduce the abrupt changes in the setpoint and lower the equipment fatigue. As described above, the building demand forecast serves as the essential constraint to the control of the system. In some embodiments, the controller creates a system control plan for a longer prediction horizon, and the controller creates a control plan in which the geothermal system is used for longer periods of time without reaching the ground heat limit (as described herein).

In some embodiments, the building forecast mode can be extended to detect an alarm, which notifies the user about the abnormal consumption of the energy. In some embodiments, this alarm is designed for parts of the building or for the building as a whole. This will be further used in model predictive control 850 to adapt the actual status of the building. In some embodiments, an alarm is generated if an R2 score (i.e., a statistical correlation) of the demand to the actual consumption is less than a threshold, for instance 0.75. In some embodiments, a variation in R2 score or other statistical correlation by temperature and/or season can indicate a fault with a particular components of the system. In some embodiments, the statistical correlation can be extended to other variables showing some seasonality pattern.

In some embodiments, any control plan or control schedule described herein is optimized for cost savings. In some embodiments, any control plan or control schedule described herein is optimized to decrease energy consumption. In some embodiments, any control plan or control schedule described herein is optimized for inlet or outlet temperatures of the geothermal well.

Embodiments of the present invention may comprise or utilize a special purpose or general-purpose computer including computer hardware, such as the controller described in relation to FIG. 1 and elsewhere, and computer hardware as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments of the invention can comprise at least two distinctly different kinds of computer-readable media: hardware computer-readable storage media and transmission computer-readable media.

In some embodiments, hardware computer-readable storage media includes RAM, ROM, EEPROM, CD-ROM or other optical disk storage (such as CDs, DVDs, etc.), magnetic disk storage or other magnetic storage devices, or any other non-transitory hardware storage device which can be used to store desired program code in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above are also included within the scope of computer-readable media.

Further, upon reaching various computer system components, program code means in the form of computer-executable instructions or data structures can be transferred automatically from transmission computer-readable media to physical computer-readable storage media (or vice versa). For example, computer-executable instructions or data structures received over a network or data link can be buffered in RAM within a network interface module (e.g., a "NIC"), and then eventually transferred to computer system RAM and/or to less volatile computer-readable physical storage media at a computer system. Thus, computer-readable physical storage media can be included in computer system components that also (or even primarily) utilize transmission media.

Computer-executable instructions comprise, for example, instructions and data which cause a general-purpose computer, special purpose computer, or special purpose processing device to perform a certain function or group of functions. The computer-executable instructions may be, for example, binaries, intermediate format instructions such as assembly language, or even source code.

The present disclosure relates generally to designing a building, a geothermal well, or a combination of building and geothermal well according to at least the following clauses:
Clause 1. A method of designing a geothermal heating system, the method comprising: obtaining a thermal sample, wherein the thermal sample has a sample duration and sample resolution exhibiting periodicity; training a thermal model for predicting the thermal demand of the facility based on the thermal sample, wherein the thermal model is based at least on one external factor, wherein the external factor includes a predicted external temperature and wherein training the thermal model includes determining one or more variables of the thermal model using the thermal sample; predicting a thermal demand of the facility based on the trained thermal model and the external factor; and designing a component of the geothermal heating system based at least partially on the predicted thermal demand.
Clause 2. The method of clause 1, wherein the sample duration is no less than one week.
Clause 3. The method of clause 2, wherein the sample duration is no less than two week.
Clause 4. The method of any preceding clause, wherein the thermal sample is a demand sample from a building in thermal communication with a geothermal well.
Clause 5. The method of clause 4, wherein the component includes a heating, ventilation, and air conditioning (HVAC) system of the building.
Clause 6. The method of clause 4 or 5, wherein the component includes a heat exchanger of the geothermal well.
Clause 7. The method of any of clauses 4 through 6, wherein the component includes one or more boreholes of the geothermal well.
Clause 8. The method of any of clauses 1 through 3, wherein the thermal sample is a supply sample from a geothermal well in thermal communication with a building.
Clause 9. The method of clause 8, wherein the component includes an HVAC system of the building.
Clause 10. The method of clause 8, wherein the component includes at least one structural component of the building.
Clause 11. The method of clause 8, wherein the component includes a heat exchanger of the geothermal well.
Clause 12. The method of any of clauses 8 through 11, wherein the supply sample is a temperature difference between an inlet temperature of the geothermal well and an outlet temperature of the geothermal well.
Clause 13. The method of any of clauses 8 through 11, wherein the supply sample is a ground thermal load of the geothermal well.
Clause 14. The method of any preceding clause, wherein the thermal model is a Fourier series.
Clause 15. The method of any preceding clause, wherein training the thermal model includes changing at least one coefficient of a Fourier series.
Clause 16. The method of any preceding clause, further comprising calculating an error estimation and wherein the designing a component is based at least partially on the error estimation in the predicted thermal demand.
Clause 17. The method of any preceding clause wherein the thermal sample further includes historical weather data.
Clause 18. The method of any preceding clause wherein the external factor includes forecasted weather data.
Clause 19. The method of any preceding clause, wherein the external factor includes historical weather data.
Clause 20. A method of designing a geothermal heating and/or cooling system in thermal communication with a facility, the method comprising: obtaining a thermal sample of a parameter relative to a thermal demand of the facility over a short period, wherein the thermal sample has a sample duration and sample resolution exhibiting periodicity; training a thermal model for predicting the thermal demand of the facility based on the thermal sample, wherein the thermal model is based at least on one external factor, wherein the external factor includes a predicted external temperature and wherein training the thermal model includes determining one or more variables of the thermal model using the thermal sample; predicting a thermal demand of the facility based on the trained thermal model and the external factor; and designing a component of the geothermal heating and/or cooling system based at least partially on the predicted thermal demand.
Clause 21. The method of any preceding clause, wherein the periodicity is no less than 24 hours, optionally no less than 1 week.
Clause 22. The method of any preceding clause, wherein designing the component of the geothermal heating and/or cooling system includes at least one of selecting a setting of the component and selecting a flowrate of a working fluid through the geothermal heating and/or cooling system.
Clause 23. The method of the preceding clause, wherein selecting a setting of the component includes selecting a temperature setpoint of a heat pump of the geothermal heating and/or cooling system.
Clause 24. The method of any preceding clause, wherein designing the component of the geothermal heating and/or cooling system includes dimensioning at least a portion of the heating system, optionally at least one borehole in the geothermal heating system.
Clause 25. The method of any preceding clause, wherein designing a component includes activating the component of the geothermal heating and/or cooling system based on a comparison of the predicted thermal demand of the thermal model and a measured thermal demand of the geothermal heating and/or cooling system for the same time period.
Clause 26. The method of the preceding clause, wherein activating the component of the geothermal heating and/or cooling system includes activating a fault alarm based on a comparison between the predicted thermal demand of the thermal model and the measured thermal demand of the geothermal heating and/or cooling system for the same time period that is greater than a threshold value.
Clause 27. The method of any preceding clause, wherein designing a component of the geothermal heating and/or cooling system includes designing a control schedule for a supplemental HVAC component(s).
Clause 28. The method of any preceding clause, further comprising predicting a subsurface temperature of a borehole of the geothermal heating and/or cooling system using the thermal model, and wherein designing the control schedule includes preventing a subsurface temperature from exceeding a temperature limit.
Clause 29. The method of clause 27 or 28, wherein designing the control schedule includes an optimizing a cost of heating and/or cooling of the facility.
Clause 30. The method of any preceding clause, further comprising: creating a corrected predicted thermal demand based on a measured external temperature over a time period and computing a baseline consumption of the geothermal heating and/or cooling system over the time period based on the corrected predicted thermal demand; obtaining a measured consumption of the geothermal heating and/or cooling system over the time period; comparing the measured consumption to the baseline consumption to create a consumption difference; and based on the consumption difference, determining a cost difference between the measured consumption and the baseline consumption.
Clause 31. The method of the preceding clause, further comprising predicting a future energy cost based on the cost difference and the predicted thermal demand for a future time period.
Clause 32. The method of any preceding clause, wherein the thermal model is a Fourier series.
Clause 33. A non-transitory computer-readable media (CRM), the CRM having instructions stored thereon that, when executed by a computing device, cause the computing device to perform the method of any preceding clause.

While embodiments have been described herein, those skilled in the art, having benefit of this disclosure, will appreciate that other embodiments are envisioned that do not depart from the inventive scope. Accordingly, the scope of the present claims or any subsequent claims shall not be unduly limited by the description of the embodiments described herein.

## Claims

1. A method of designing a geothermal heating and/or cooling system in thermal communication with a facility, the method comprising:
obtaining a thermal sample of a parameter relative to a thermal demand of the facility over a short period, wherein the thermal sample has a sample duration and sample resolution exhibiting periodicity;
training a thermal model for predicting the thermal demand of the facility based on the thermal sample, wherein the thermal model is based at least on one external factor, wherein the external factor includes a predicted external temperature and wherein training the thermal model includes determining one or more variables of the thermal model using the thermal sample;
predicting a thermal demand of the facility based on the trained thermal model and the external factor; and
designing a component of the geothermal heating and/or cooling system based at least partially on the predicted thermal demand.

2. The method of claim 1, wherein the periodicity is no less than 24 hours, optionally no less than 1 week.

3. The method of any preceding claim, wherein designing the component of the geothermal heating and/or cooling system includes at least one of selecting a setting of the component and selecting a flowrate of a working fluid through the geothermal heating and/or cooling system.

4. The method of the preceding claim, wherein selecting a setting of the component includes selecting a temperature setpoint of a heat pump of the geothermal heating and/or cooling system.

5. The method of any preceding claim, wherein designing the component of the geothermal heating and/or cooling system includes dimensioning at least a portion of the heating system, optionally at least one borehole in the geothermal heating system.

6. The method of any preceding claim, wherein designing a component includes activating the component of the geothermal heating and/or cooling system based on a comparison of the predicted thermal demand of the thermal model and a measured thermal demand of the geothermal heating and/or cooling system for the same time period.

7. The method of the preceding claim, wherein activating the component of the geothermal heating and/or cooling system includes activating a fault alarm based on a comparison between the predicted thermal demand of the thermal model and the measured thermal demand of the geothermal heating and/or cooling system for the same time period that is greater than a threshold value.

8. The method of any preceding claim, wherein designing a component of the geothermal heating and/or cooling system includes designing a control schedule for a supplemental HVAC component(s).

9. The method of any preceding claim, further comprising predicting a subsurface temperature of a borehole of the geothermal heating and/or cooling system using the thermal model, and wherein designing the control schedule includes preventing a subsurface temperature from exceeding a temperature limit.

10. The method of claim 8 or 9, wherein designing the control schedule includes an optimizing a cost of heating and/or cooling of the facility.

11. The method of any preceding claim, further comprising:
creating a corrected predicted thermal demand based on a measured external temperature over a time period and computing a baseline consumption of the geothermal heating and/or cooling system over the time period based on the corrected predicted thermal demand;
obtaining a measured consumption of the geothermal heating and/or cooling system over the time period;
comparing the measured consumption to the baseline consumption to create a consumption difference; and
based on the consumption difference, determining a cost difference between the measured consumption and the baseline consumption.

12. The method of the preceding claim, further comprising predicting a future energy cost based on the cost difference and the predicted thermal demand for a future time period.

13. The method of any preceding claim, wherein the thermal model is according to: $\hat{P} \left(t, {T}_{ext}\right) = f \left({T}_{ext}\left(t\right)\right) \times S \left(t\right) + ϵ \left(t\right) .$

14. The method of any preceding claim, wherein the thermal model is a Fourier series.

15. A non-transitory computer-readable media (CRM), the CRM having instructions stored thereon that, when executed by a computing device, cause the computing device to perform the method of any preceding claim.
